# EUROPÄISCHE PATENTANMELDUNG

(11) **EP 0 762 680 A2**
(43) Veröffentlichungstag der Anmeldung: **12.03.1997**
(21) Anmeldenummer: 96109796.1
(22) Anmeldetag: 18.06.1996
(51) Int. Cl.: H04H 1/00

(54) **Verfahren zur Übertragung und Installation und/oder Aktualisierung von Software und/oder Daten**

(30) Priorität: 23.08.1995 DE 19531063; 14.05.1996 DE 19619491
(71) Anmelder: FRAUNHOFER-GESELLSCHAFT ZUR FÖRDERUNG DER ANGEWANDTEN FORSCHUNG E.V., 80636 München (DE)
(72) Erfinder: Zeller, Jürgen, 91056 Erlangen (DE); Spinnler, Wolfgang, 91054 Erlangen (DE); Gerhäuser, Heinz, 91344 Waischenfeld (DE); Korte, Olaf, 90542 Eckental-Eschenau (DE); Caldenhoven, Frank, 91058 Erlangen (DE); Haist, Markus, 90425 Nürnberg (DE); Plankenbühler, Roland, 90475 Nürnberg (DE); Heuberger, Albert, 91056 Erlangen (DE); Keyhl, Michael, 90425 Nürnberg (DE)
(74) Vertreter: Schoppe, Fritz, Dipl.-Ing.

(57) **Zusammenfassung**

Ein Verfahren zum Übertragen von in Form von Datenpaketen (a,b,c,x,y,z) vorliegenden Datensätzen (10,20) von einem Sender zu einem Empfänger ohne eine Rückmeldung von dem Empfänger zu dem Sender bezüglich der Fehlerfreiheit der übertragenen Daten (10,20) beinhaltet das Einteilen der Datensätze (10,20) in Datensätze höherer Priorität (10) und in Datensätze niedrigerer Priorität (20). Die Datensätze höherer Priorität (10) werden mit einer hohen Datensatzübertragungsrate gesendet, wobei die Datenpakete (a,b,c) eines Datensatzes höherer Priorität (10) bei jedem Senden eines Datensatzes (10) nur einmal oder mit einer geringen Anzahl von Wiederholungen gesendet werden. Die Datensätze niedriger Priorität (10) werden mit einer geringen Datensatzübertragungsrate gesendet, wobei die Datenpakete (x,y,z) eines Datensatzes niedriger Prioriät (10) bei jedem Senden des Datensatzes (10) mit einer größeren Anzahl von Wiederholungen gesendet werden.

## Beschreibung

Die Vorliegende Erfindung bezieht sich auf ein Verfahren zum Übertragen von in Form von Datenpaketen vorliegenden Daten von einem Sender zu einem Empfänger und insbesondere auf ein Verfahren zum zuverlässigen Übertragen von Daten zu einer Mehrzahl von Empfängern.

Es sind Systeme zur Übertragung und Installation und/oder Aktualisierung von Software und Daten bekannt, bei denen Programme oder Daten von einer zentralen Stelle zu mehreren an einem Netz angeschlossenen Rechnern übertragen werden. Die übertragenen Daten können Teile der Software oder die vollständige Software bzw. Steuerdaten in einem Empfänger ersetzen.

Ein Beispiel für ein derartiges System ist die Fernwartung von Rechnern mit EMail, bei der Steuerprozeduren auf dem gewarteten Rechner ausgeführt, bzw. Programme zu demselben übertragen werden.

Um sicherzustellen, daß der Empfänger fehlerfreie Informationen durch die Übertragung empfangen hat, führt er in der Regel eine Rückmeldung an den Sender durch, da die meisten Übertragungskanäle nicht fehlerfrei sind. Viele Systeme sind ohne eine derartige Kommunikation zwischen dem Sender und den Empfängern nicht funktionsfähig. Zur Realisierung einer derartigen Rückmeldung ist ein Rückkanal erforderlich, bzw. eine bidirektionale Verbindung notwendig.

Außerdem ist es für einen sinnvollen Betrieb notwendig, daß der Sender alle Empfänger kennt, um sie anzusprechen bzw. angemessen berücksichtigen zu können. Bei einer sehr großen Anzahl von Empfängern, die gleichzeitig von einer zentralen Stelle mit Informationen versorgt werden, kann nicht jeder Empfänger individuell antworten, da dadurch ein überdimensionaler Rückkanal vorhanden sein müßte. Deshalb eignen sich bekannte System nicht für die Versorgung einer sehr großen Zahl von Empfangseinrichtungen mit Informationen, d.h. die Übertragung von Daten von einer zentralen Stelle zu einer großen Zahl von Empfängern.

Ausgehend von dem genannten Stand der Technik liegt der vorliegenden Erfindung die Aufgabe zugrunde, ein Verfahren zur Übertragung von Daten zu schaffen, welches für einen gleichzeitigen Betrieb mit einer sehr großen Zahl von Empfängern geeignet ist und eine ausreichende Wahrscheinlichkeit liefert, daß nach einer festlegbaren Zeit gültige Daten in den Empfängern vorliegen.

Diese Aufgabe wird durch ein Verfahren gemäß Patentanspruch 1 gelöst.

Die vorliegende Erfindung schafft ein Verfahren zum Übertragen von in Form von Datenpaketen vorliegenden Datensätzen von einem Sender zu einem Empfänger ohne eine Rückmeldung von dem Empfänger zu dem Sender bezüglich der Fehlerfreiheit der übertragenen Datensätze mit folgenden Schritten:

Einteilen der Datensätze in Datensätze höherer Priorität und Datensätze niedrigerer Priorität;

Senden der Datensätze höherer Priorität mit einer hohen Datensatzübertragungsrate, wobei die Datenpakete eines Datensatzes höherer Priorität bei jedem Senden eines Datensatzes nur einmal oder mit einer geringen Anzahl von Wiederholungen gesendet werden; und

Senden der Datensätze niedrigerer Priorität mit einer geringen Datensatzübertragungsrate, wobei die Datenpakete eines Datensatzes niedrigerer Priorität bei jedem Senden des Datensatzes mit einer größeren Anzahl von Wiederholungen gesendet werden.

Gemäß der vorliegenden Erfindung können beispielsweise Daten, die ein Inhaltsverzeichnis definieren, als Daten höherer Priorität eingeteilt werden, während Daten, die Artikel innerhalb des Verzeichnisses definieren, als Daten niedrigerer Priorität eingeteilt werden.

Die mittels des erfindungsgemäßen Verfahrens übertragenen Daten können beispielsweise Informationen zum Installieren und/oder Aktualisieren von Software in einer Speichereinrichtung des Empfängers beinhalten. Ferner können die Daten Metainformationen beinhalten, die Informationen bezüglich des zeitlichen Auftretens der Datenpakete enthalten.

Gemäß einem Ausführungsbeispiel der vorliegenden Erfindung werden Daten auf Anwendungsebene im Sinne der Schicht 7 der ISO-Norm, die prinzipiell mit einer sehr hohen Sendefrequenz übertragen werden, auf Transportebene im Sinne der Schicht 4 der ISO-Norm nicht noch einmal wiederholt. Dagegen werden Daten auf Transportebene im Sinne der Schicht 4 der ISO-Norm, die prinzipiell mit einer sehr geringen Sendefrequenz übertragen werden, auf Transportebene im Sinne der Schicht 4 der ISO-Norm und/oder darunter wiederholt übertragen.

Bevorzugte Ausführungsbeispiele der vorliegenden Erfindung werden nachfolgend teilweise bezugnehmend auf die beiliegenden Zeichnungen näher erläutert. Es zeigen:
- Fig. 1A: eine zeitliche Darstellung des Sendens eines Datensatzes mit höherer Priorität;
- Fig. 1B: eine zeitliche Darstellung des Sendens eines Datensatzes mit niedrigerer Priorität;
- Fig. 2A und 2B: eine zeitliche Darstellung des Übertragungsverfahrens gemäß der vorliegenden Erfindung; und
- Fig. 3: eine zeitliche Darstellung eines wiederholten Sendens von Datenpaketen.

Die vorliegende Erfindung schafft ein Verfahren zur Übertragung und Installation und/oder Aktualisierung von Software und Daten, das für einen gleichzeitigen Betrieb mit einer sehr großen Zahl von Empfängern geeignet ist. Die übertragene Software und/oder die Daten können sowohl zum Gebrauch im Empfänger als auch zu einer externen Nutzung eingesetzt werden. Das erfindungsgemäße Verfahren kann mittels spezieller Übertragungsprotokolle vom Sender zum Empfänger, die die Übertragung mit einer im Vergleich zum Übertragungskanal wesentlich geringeren Fehlerwahrscheinlichkeit ermöglichen, weshalb ein Rückkanal nicht notwendig ist, durchgeführt werden. Da bei einem fehlenden Rückkanal der Empfänger keine Wiederholungen der Übertragung durch den Sender initiieren kann, muß die Wahrscheinlichkeit, daß nach einer festlegbaren Zeit gültige Daten im Empfänger sind, ausreichend groß gemacht werden. Dies wird bei dem erfindungsgemäßen System dadurch erreicht, daß in geeigneter Form Wiederholungen eingeführt und Mechanismen bereitgestellt werden, um diese Wiederholungen zu nutzen.

Zu diesem Zweck können die zu übertragenden Informationen in geeignete Teilblöcke aufgeteilt werden, die nach ausreichend langen Zeitabschnitten wiederholt werden. Damit können aus verschiedenen Übertragungen der gleichen Informationen Teilblöcke genutzt werden und die Informationen rekonstruiert werden, auch wenn keine einzelne Übertragung der Gesamtinformationen vollständig fehlerfrei war.

Die somit als vollständig fehlerfrei erkannten Informationen sind in der Regel Bestandteil eines größeren modularen Aufbaus, dessen Integrität ausschlaggebend für dessen Nutzbarkeit ist. Durch eine Multiplexübertragung wird es ferner ermöglicht, mehrere Informationsmodule bzw. Einzelinformationen quasi parallel zu übertragen. Ein Beispiel für ein derartiges Modul ist das Aktualisieren (Update) der Systemsoftware einer Empfangseinrichtung. Dazu ist es zwingend notwendig, daß nicht nur einzelne Teile, sondern alle Bestandteile korrekt empfangen wurden.

Die Empfängervorrichtungen sind in der Lage, aus den empfangenen Informationen zu erkennen, welcher Art die Informationen sind und wie dieselben weiter verarbeitet werden müssen. Dies kann zur Folge haben, daß die Empfangsvorrichtungen erweitert bzw. modifiziert werden. Dies schließt auch die Veränderungen der Funktion und des Erscheinungsbildes der Empfangsvorrichtungen gegenüber einem Benutzer ein. Dies kann beispielsweise bei einer mit einem Touchscreen ausgestatteten Empfangsvorrichtung die grafische Anzeige des Bediengeräts sein. Es ist dann beispielsweise möglich, daß in einer Betriebsart ein CD-Player, einschließlich der Tasten zur Bedienung, dargestellt ist, während in einer anderen Betriebsart ein GPS-Navigationsempfänger (GPS = global positioning system) dargestellt ist.

Die Reaktion einer Empfangsvorrichtung auf erhaltene Steueranweisungen, die von der Sendevorrichtung gesendet werden, kann geräteabhängig sein oder auch für alle Geräte gelten. Die Geräteunabhängigkeit kann durch die Verwendung einer abstrakten Scriptsprache erreicht werden. Verschiedene Empfangseinrichtungen können die übertragenen Informationen in unterschiedlicher Weise darstellen, beispielsweise abhängig davon, ob die Empfangseinrichtung eine Grafikfähigkeit aufweist oder nicht. Je nach Empfangseinrichtung und erhaltener Steuerinformationen kann der Benutzer in die Systemreaktion auf die Übertragung eingreifen.

Bei einer vorteilhaften Realisierung des erfindungsgemäßen Verfahrens in einem Übertragungssystem ohne Rückkanal kann ein hierarchisches, skalierbares, hypermediales Informationsangebot dargestellt werden. Ein derartiges Übertragungssystem kann beispielsweise der digitale Rundfunk sein. Bei einem hypermedialen System werden verschiedene Medien, beispielsweise Text, Grafik, Audio oder andere, die menschlichen Sinne anregenden Informationen, in einem verknüpften Kontext dargestellt. Die Skalierbarkeit wird dadurch ermöglicht, daß auch einzelne Informationen eines Moduls für den Benutzer eine sinnvolle Interpretation des Moduls erlauben. Dazu gehört auch, daß diese essentiellen Teile häufiger bzw. öfter übertragen werden, so daß eine Empfangsvorrichtung bereits nach kurzer Zeit diese Grundinformationen zur Verfügung hat. Die hierarchische Präsentation strukturiert die Informationen derart, daß ein Benutzer sie möglichst einfach nutzen kann.

Im folgenden wird ein Beispiel des erfindungsgemäßen Verfahrens näher erläutert, bei dem die Software und/oder die Daten mit Hilfe des Datenrundfunks DAB (DAB = digital audio broadcasting) übertragen werden. Mit den Datenübertragungskanälen innerhalb des DAB steht erstmalig eine Möglichkeit zur Verfügung, um digitale Daten gleichzeitig an eine sehr große Benutzergruppe zu übertragen. Mittels dieses Datenrundfunkes stehen neue Wege bei dem Angebot von Diensten und bei der Präsentation der Inhalte zur Verfügung.

Dabei können neben den vom konventionellen Radio bekannten starren Sendeplänen auch aktuelle Informationen, beispielsweise Börsenkurse, gleichzeitig übertragen werden. Die übertragenen Daten können multimedial sein, da der Dateninhalt beliebig sein kann. Die Benutzerführung und die Präsentation der Daten kann abhängig vom Endgerät auf eine interaktive Weise erfolgen. Je nach Benutzerprofil können andere Daten angeboten werden, bzw. kann die Aufbereitung der Informationen unterschiedlich erfolgen. Ein optionaler Rückkanal, der nicht zur Rückmeldung von dem Empfänger zu dem Sender bezüglich der Fehlerfreiheit der übertragenen Daten dient, kann eine Erweiterung der interaktiven Benutzung des Endgerätes schaffen, da damit beispielsweise auch Bestellungen oder ähnliches vorgenommen werden können. Ferner können die Fähigkeiten des Endgeräts im Betrieb erweitert werden, indem über DAB jedem Endgerät neue Anwendungsmodule, beispielsweise Programme, hinzugefügt werden.

Die Verknüpfung von aktuellen Informationen, die eine hohe Aktualisierungsrate aufweisen, sowie längerfristigen Informationen, beispielsweise Katalogen und Landkarten, erfordert bei einem fehlenden Rückkanal spezielle Protokolle und eine angepaßte Ausstrahlung.

Eine typische, beim Datenrundfunk DAB auftretende Fehlerquelle sind sogenannte "Burst-Fehler", die eine kurzzeitige Totalstörung darstellen. Um derartige Burst-Fehler wirksam zu bekämpfen, ist eine wiederholte Ausstrahlung nötig. Dabei ist es wichtig, eine Wiederausstrahlung erst nach den typischen Burst-Längen durchzuführen, damit nicht beide Übertragungen verloren gehen. Die Wiederausstrahlung kann über zwei verschiedene Mechanismen erfolgen.

Der eine Mechanismus ist eine Wiederausstrahlung der Daten auf Anwendungsebene im Sinne der Schicht 7 der ISO-Norm. Medienobjekte, d.h. Daten, die prinzipiell in einer sehr hohen Sendefrequenz ausgestrahlt werden, benötigen auf der Transportebene im Sinne der Schicht 4 der ISO-Norm nicht nochmals eine Wiederholung. Typischerweise sind solche Daten von temporärer Natur, beispielsweise Börsenkurse, Temperaturen usw., bzw. enthalten Steuerinformationen. Als zweites kann eine Wiederausstrahlung der Daten auf Transportebene im Sinne der Schicht 4 der ISO-Norm erfolgen. Wenn ein Medienobjekt selten, beispielsweise nur einmal in der Woche, ausgestrahlt wird, ist es notwendig, auf Transportebene im Sinne der Schicht 4 der ISO-Norm bzw. darunter eine Mehrfachausstrahlung vorzunehmen, um die Wahrscheinlichkeit, daß die Daten vollständig korrekt empfangen wurden, genügend hoch zu machen.

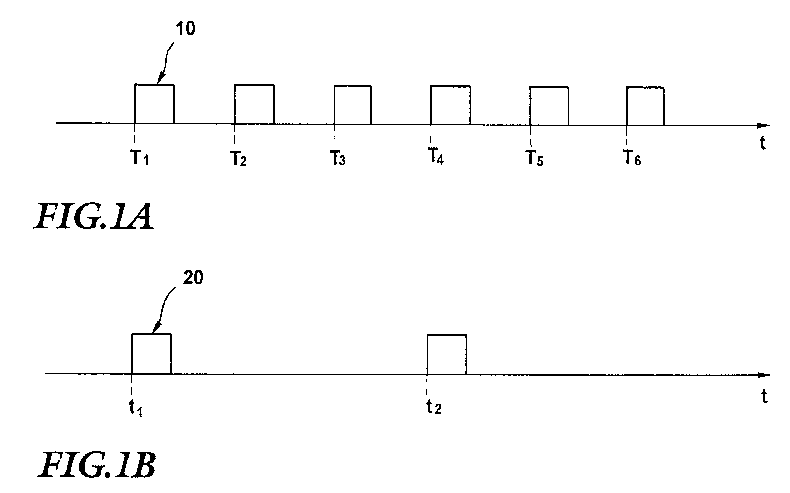

In Fig. 1A ist eine schematische zeitliche Darstellung des Sendens eines Datenblocks 10 mit höherer Priorität dargestellt. Der Datenblock 10 wird mit einer hohen Datensatzübertragungsrate jeweils zu den Zeitpunkten T₁, T₂, T₃, T₄, T₅ und T₆ übertragen. Fig. 1B ist eine schematische zeitliche Darstellung des Sendens eines Datensatzes 20 mit niedrigerer Priorität. Der Datensatz 20 wird mit einer geringen Datensatzübertragungsrate jeweils zu den Zeitpunkten t₁ und t₂ übertragen. Der Datensatz 10 höherer Priorität wird daher mit einer größeren Sendehäufigkeit übertragen als der Datensatz 20 geringerer Priorität.

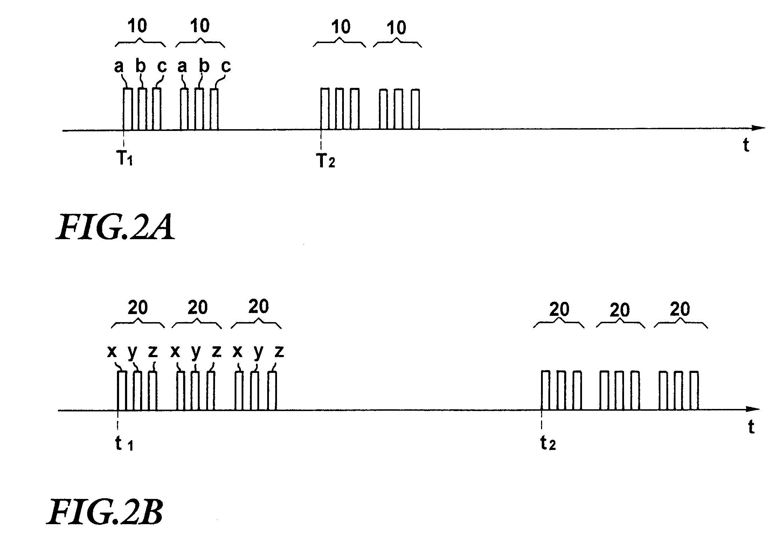

Die in Fig. 1A und Fig. 1B dargestellten Datensätze 10 und 20 liegen üblicherweise in der Form von Datenpaketen vor. In der Fig. 2A ist der Datensatz 10 aufgeteilt in drei Datenpakete a, b und c dargestellt. In Fig. 2B ist der Datensatz 20 geringerer Priorität aufgeteilt in drei Datensätze x, y und z dargestellt. In den Figuren sind zu Zwecken der Klarheit jeweils nur drei Datenpakete für einen Datensatz dargestellt. Es ist jedoch offensichtlich, daß ein Datensatz in eine beliebige größere Anzahl von Datenpaketen aufgeteilt sein kann.

Wie in Fig. 2A exemplarisch dargestellt ist, werden die Datenpakete a, b, c des Datensatzes 10, der mit einer hohen Datensatzübertragungsrate übertragen wird, bei jedem Senden des Datensatzes 10, d.h. zu den Zeitpunkten T₁, T₂ usw., zweimal gesendet. Wie in Fig. 2B exemplarisch dargestellt ist, werden die Datenblöcke x,y und z des Datensatzes 20 geringerer Priorität, der mit einer geringen Datensatzübertragungsrate übertragen wird, zu jedem Sendezeitpunkt, d.h. t₁ und t₂, dreimal gesendet. Das in den Fig. 2A und 2B angegebene Beispiel dient lediglich der Veranschaulichung, um zu verdeutlichen, daß die Datenblöcke, a,b,c des Datensatzes 10 höhere Priorität bei jedem Senden des Datensatzes mit einer geringen Anzahl von Wiederholungen gesendet werden, während die Datenblöcke x,y,z des Datensatzes 20 bei jedem Senden des Datensatzes mit einer größeren Anzahl von Wiederholungen gesendet werden. Die in den Fig. 2A und 2B dargestellte Anzahl der Wiederholungen dient ausschließlich exemplarischen Zwecken. Beispielsweise könnten die Datenblöcke des Datensatzes 10 höherer Priorität nur einmal bei jedem Senden des Datensatzes gesendet werden. Genauso könnten die Datenblöcke des Datensatzes 10 höherer Priorität beispielsweise dreimal wiederholt werden, jedoch weniger häufig als die Datenblöcke des Datensatzes 20 mit geringerer Priorität.

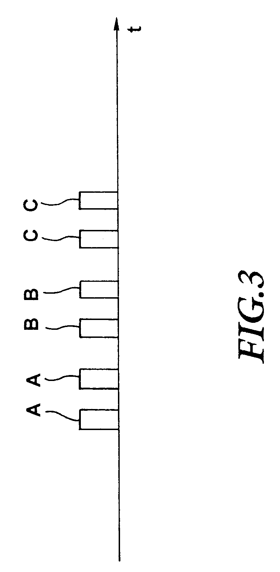

In Fig. 3 ist ein alternatives Ausführungsbeispiel zum Wiederholen der Datenblöcke eines Datensatzes gezeigt. Gemäß Fig. 3 ist ein Datensatz in drei Datenblöcke A, B und C aufgeteilt. Der Datensatz wird bei dem in Fig. 3 dargestellten Beispiel zweimal gesendet, wobei jeweils die einzelnen Datenblöcke, A, B, A zweimal hintereinander gesendet werden. Selbstverständlich könnten die einzelnen Datenblöcke auch öfter wiederholt gesendet werden. Alternativ zu den beschriebenen Ausführungsbeispielen können beliebige, Fachleuten gut bekannte Verfahren zum wiederholten Senden von Datenblöcken eines Datensatzes verwendet werden.

Das erfindungsgemäße Verfahren stellt durch das Senden der Datenblöcke eines Datensatzes mit niedriger Priorität mit einer großen Häufigkeit bei jedem Senden des Datensatzes sicher, daß mit großer Wahrscheinlichkeit am Empfänger der unversehrte Datensatz vorliegt. Die Datenpakete eines Datensatzes höherer Priorität, die mit einer hohen Datensatzübertragungsrate übertragen werden, werden dagegen bei jedem Senden des Datensatzes nur einmal oder mit einer geringen Anzahl von Wiederholungen gesendet.

Die Zeitdauer zwischen dem wiederholten Senden von Datenpaketen eines Datensatzes ist vorzugsweise länger als eine typische Burst-Länge, um einen Verlust beider Übertragungen der Datenpakete zu vermeiden.

Da größere Datenmengen prinzipiell in kleinere Blöcke, sogenannte Datagroups, aufgeteilt werden müssen, ist es notwendig, parallel mehrere Medienobjekte gleichzeitig im Zeitmultiplex auszustrahlen. Dabei kann die Übertragungsgeschwindigkeit, bzw. die Übertragungssicherung, der verschiedenen Medienobjekte oder Datenpakete durchaus unterschiedlich sein.

Zusätzlich zu den eigentlichen Medienobjekten können Datenpakete Informationen über das zeitliche Auftreten der in den Medienobjekten enthaltenen Informationen enthalten. Dies umfaßt beispielsweise, wann welche Informationen wieder ausgestrahlt werden. Dadurch ist das Endgerät, das den Empfänger aufweist, in der Lage, dem Benutzer Meldungen anzuzeigen, die denselben in Kenntnis setzen, wann angewählte Informationen, die momentan nicht verfügbar sind, wieder verfügbar sein werden. Dadurch wird ein Benutzer nicht durch Hinweise wie z.B. "Seite nicht gefunden" abgeschreckt, sondern kann durch eine wie folgt lautende Meldung davon in Kenntnis gesetzt werden, wann die Informationen wieder verfügbar sein werden: "Die angewählten Informationen sind im Moment nicht verfügbar. Sie werden voraussichtlich in zehn Minuten verfügbar sein. Bitte versuchen Sie es dann nochmals."

Um während des Betriebs eine Erweiterung des Empfängerendgeräts zu ermöglichen, beispielsweise dessen Funktionalität zu erweitern oder die Systemsoftware bzw. die Treiber auszutauschen, muß ein Mechanismus vorgesehen sein, der ein Empfängerendgerät in die Lage versetzt, dies sicher und kontrolliert durchzuführen. Dies wird durch die Benutzung einer maschinenunabhängigen, sicheren Scriptsprache, beispielsweise Perl und Java, erleichtert.

Der wesentliche Unterschied von DAB zu anderen digitalen Informationsmedien ist der inhärent fehlende Rückkanal. Dadurch können übliche Protokolle auf den Schichten 2, 3 und 4 (data link, network, transport) des ISO-Schichtenmodelles (ISO = International Standardization Organization) nicht eingesetzt werden, bzw. können die Mechanismen derselben nicht angewendet werden, beispielsweise zur Fehlerkorrektur oder zur Flußkontrolle. Damit ergeben sich neue Protokolle auf Transport- und Anwendungs-Ebene.

Ein Empfängerendgerät kann jedoch auch ohne einen Rückkanal einen interaktiven Betrieb und eine Hypertext/Hypermedia-Präsentation erlauben. Dies ist der Fall, da bei einer lokalen Speicherung auf Festplatte in dem Empfängerendgerät interaktiv auf die Daten desselben zugegriffen werden kann. Ein Beispiel dafür ist das Anwählen mittels einer Eingabevorrichtung, beispielsweise einer Maus oder einer Tastatur, eines Autobahnabschnitts auf einer Karte, die auf einer Anzeigevorrichtung, beispielsweise einem Bildschirm, angezeigt wird, woraufhin Daten über die Auslastung des Autobahnabschnitts der letzten 24 Stunden als ein Diagramm erscheinen.

Im Vergleich zu üblichen Empfängerendgeräten, beispielsweise Autoradios, Fernsehern, usw., kann das Anwendungsfeld eines Datenendgeräts nach dessen Auslieferung noch in sehr weiten Bereichen geändert werden. Beispielsweise kann ein optional verfügbarer Rückkanal ideal genutzt werden, um weitere Dienste zu ermöglichen. Diese können beispielsweise Bestellungs- oder Buchungs-Dienste sein. Bei diesen Diensten wird in irgendeiner Form ein meist formularbasiertes Angebot wahrgenommen. Meist erfolgt unmittelbar auf die Bestellung eine Bestätigung. Ein weiteres Beispiel ist die Mitteilung von Erhebungsdaten. Dabei werden beispielsweise Daten über Empfangsfeldstärken, Fehlerraten oder bevorzugte Programminhalte an die zentrale Sendestelle oder den Anbieter zurückgemeldet.

Die Erweiterbarkeit der Anwendungen und der Austausch von Systemteilen über ein Transportmedium ohne einen Rückkanal ist ebenfalls eine Neuerung gegenüber konventionellen Wartungsverfahren. Besonders ist dabei die potentielle Endgerätevielfalt zu beachten und das möglichst "selbstheilende" Aktualisieren (Update) von Systemsoftware wichtig.

Die vorliegende Erfindung schafft somit ein Verfahren zum Übertragen von Daten, insbesondere von Datensätzen, die in Form von Datenpaketen vorliegen, mit einer möglichst geringen Fehlerwahrscheinlichkeit bei einer niedrigen Verzögerung von wichtigen Daten.

## Patentansprüche

1. Verfahren zum Übertragen von in Form von Datenpaketen (a,b,c,x,y,z) vorliegenden Datensätzen (10,20) von einem Sender zu einem Empfänger ohne Rückmeldung von dem Empfänger zu dem Sender bezüglich der Fehlerfreiheit der übertragenen Datensätze (10,20) mit folgenden Schritten:
Einteilen der Datensätze (10,20) in Datensätze höherer Priorität (10) und Datensätze niedrigerer Priorität (20);
Senden der Datensätze höherer Priorität (10) mit einer hohen Datensatzübertragungsrate, wobei die Datenpakete (a,b,c) eines Datensatzes höherer Priorität (10) bei jedem Senden eines Datensatzes (10) nur einmal oder mit einer geringen Anzahl von Wiederholungen gesendet werden; und
Senden der Datensätze niedriger Priorität (10) mit einer geringen Datensatzübertragungsrate, wobei die Datenpakete (x,y,z) eines Datensatzes niedriger Priorität (10) bei jedem Senden des Datensatzes (10) mit einer größeren Anzahl von Wiederholungen gesendet werden.

2. Verfahren gemäß Anspruch 1, bei dem die Datenpakete (a,b,c) eines Datensatzes höherer Priorität (10) bei jedem Senden eines Datensatzes nur einmal wiederholt gesendet werden.

3. Verfahren gemäß Anspruch 1 oder 2, bei dem die Zeitdauer zwischen dem wiederholten Senden von Datenpaketen (a,b,c,x,y,z) bei jedem senden eines Datensatzes (10,20) größer ist als die typische Dauer einer sogenannten "Burst"-Störung.

4. Verfahren gemäß Anspruch 1 oder 3, bei dem bei jedem Übertragen der Datensätze höherer Priorität (10) mit der hohen Datensatzübertragungsrate jeweils aktualisierte Datensätze höherer Priorität gesendet werden.

5. Verfahren gemäß einem der Ansprüche 1 bis 4, bei dem die Datensätze höherer Priorität Datensätze sind, die ein Inhaltsverzeichnis definieren, während die Datensätze niedrigerer Priorität Artikel innerhalb des Inhaltsverzeichnisses definieren.

6. Verfahren gemäß einem der Ansprüche 1 bis 5, bei dem die Schritte des Übertragens das Übertragen der Datensätze zu einer Mehrzahl von Empfängern aufweisen.

7. Verfahren gemäß Anspruch 1 bis 6, bei dem Daten auf Anwendungsebene im Sinne der Schicht 7 der ISO-Norm, die prinzipiell mit einer sehr hohen Sendefrequenz übertragen werden, auf Transportebene im Sinne der Schicht 4 der ISO-Norm nicht noch einmal wiederholt werden.

8. Verfahren gemäß Anspruch 1 oder 7, bei dem Daten auf Transportebene im Sinne der Schicht 4 der ISO-Norm, die prinzipiell mit einer sehr geringen Sendefrequenz übertragen werden, auf Transportebene im Sinne der Schicht 4 der ISO-Norm und/oder darunter wiederholt übertragen werden.

9. Verfahren gemäß einem der Ansprüche 1 bis 8, bei dem mehrere Datenpakete im Zeitmultiplex quasi parallel übertragen werden.

10. Verfahren gemäß einem der Ansprüche 1 bis 9, bei dem zusätzlich zu den Datensätzen Metainformationen übertragen werden, die vom Empfänger lesbar sind und Informationen bezüglich des zeitlichen Auftretens der Datensätze enthalten.

11. Verfahren gemäß einem der Ansprüche 1 bis 10, bei dem die übertragenen Datensätze Informationen zum Installieren und/oder Aktualisieren von Software in einer Speichereinrichtung des Empfängers beinhalten.
